# EUROPEAN PATENT SPECIFICATION

(11) **EP 2 564 244 B1**
(45) Date of publication and mention of the grant of the patent: **04.08.2021**
(21) Application number: 11715317.1
(22) Date of filing: 24.03.2011
(51) Int. Cl.: G01V 15/00

(54) **METHOD FOR REDUCING METAL DETECTION SYSTEM FALSE ALARMS**
VERFAHREN ZUR MINIMIERUNG VON FALSCHEN ALARMEN BEI METALLDETEKTOREN
PROCÉDÉ DE RÉDUCTION DE FAUSSES ALARMES DE SYSTÈME DE DÉTECTION DE MÉTAL

(30) Priority: 26.04.2010 US 767410
(43) Date of publication of application: 06.03.2013
(73) Proprietor: Sensormatic Electronics, LLC, Boca Raton, FL 33487 (US)
(72) Inventor: BERGMAN, Adam, S., Boca Raton, FL 33486 (US); SOTO, Manuel, A., Lake Worth, FL 33467 (US)
(74) Representative: Hafner & Kohl PartmbB
(86) International application number: PCT/US2011/000544
(87) International publication number: WO 2011/139320

(56) References cited:
- WO-A1-2010/019188
- US-A1- 2003 174 057
- US-A1- 2008 309 491
- US-A1- 2009 021 252
- US-A1- 2010 001 872
- None

## Description

### FIELD OF THE INVENTION

The present invention relates generally to metal detection systems and more specifically to a method and system for reducing the occurrences of false alarms due to inadvertent movements of the pedestals upon which the metal detector is mounted.

### BACKGROUND OF THE INVENTION

Metal detection systems are useful in detecting the unauthorized removal of metal items from a protected area as well as detecting metal objects that may be brought into a protected area. Particularly in retail environments, metal detection systems save stores hundreds of thousands of dollars by preventing the unauthorized removal of unpaid-for items from the store. In places such as schools, airports, and stadiums, metal detectors serve the purpose of preventing patrons from bringing in weapons or items that could cause harm to others or leaving with items that they have not purchased.

Metal detection systems are often combined with electronic article surveillance ("EAS") systems. EAS systems are commonly used in retail stores and other settings to prevent the unauthorized removal of goods from a protected area. Typically, such a system is configured at an exit from the protected area, which comprises one or more transmitters, receivers and antennas, stored in a housing (such as an EAS pedestal) capable of generating an electromagnetic field across the exit, known as the "interrogation zone." Articles to be protected are tagged with an EAS marker that, when active, generates a response signal when passed through this interrogation zone. An antenna and receiver in the same or another "pedestal" detects this response signal and generates an alarm.

Combination EAS/metal detection systems utilize the pedestals at the interrogation zone exits to detect both the unauthorized removal of goods as well as metal objects entering or exiting the interrogation zone.

One reason for combining metal detection functions in an EAS system is due to the problems in EAS systems related to their inability to detect unauthorized removal of tagged items in a shielded environment, such as when EAS tags are contained in a metal-lined bag. Often, unscrupulous shoppers bring metal-lined bags to a store with the idea of placing an item having an EAS tag in the bag, and walking out of the store undetected. EAS detection systems may be defeated by utilizing this method. Therefore, in order to prevent this from occurring, EAS systems employ metal detection capabilities.

While metal detection systems are extremely useful, they are not without inherent problems. For example, false alarms, that is, the actuating of the metal detection alarm when in fact there has been no unauthorized passage of metal through the detection area exit/entrance are nuisances. False alarms can be triggered by a number of factors. One factor that can cause a false metal detection alarm is the movement of the pedestals upon which the metal detector is situated. This can occur, for example, due to a patron bumping into the pedestal when leaving the store. Because the metal detection transmitter and receiver are typically situated near each other, or housed in the same unit, movement of the pedestal upon which they are mounted causes the coupling of transmission and receiving fields, which can cause unintended actuation of the metal detection alarm. Even small vibrations or movements of the pedestal can trigger a false metal detection alarm. Another reason for false alarms is due to the malfunction of the pedestal or damage to the pedestal. Typical systems do not immediately recognize the malfunction of a pedestal, leading to numerous false alarms.

Other attempts to reduce false metal detection alarms have proven to be incomplete. For example, prior attempts focus on combining a metal detection signal with people counting functionality. Attempting to logically "and" these two elements together results in an alarm failing to occur unless someone passes through the system at the time of the perceived alarm. Other attempts which are incomplete include monitoring of the input power disturbances and correlating them to the metal detection response signals. If the disturbances correlate then the alarms would be inhibited. This method has also proved to be unsuccessful and inefficient.

US 2010/001872 A1 discloses a method for detecting metal using an electronic article surveillance ("EAS") system.

US 2009/021252 A1 discloses a box-like metal detector including a housing with a passageway therethrough.

Therefore, what is needed is a system and method for preventing unwanted actuation of a metal detection alarm due to inadvertent motion, vibration, or malfunction of pedestals upon which the metal detector is mounted.

### SUMMARY OF THE INVENTION

The present invention is defined by the appended claims and provides an integrated electronic article surveillance ("EAS")/metal detection system in accordance with claim 1 and a method for reducing false alarms in an an integrated electronic article surveillance ("EAS")/metal detection system in accordance with claim 8. The system includes a motion sensor mounted on or near an antenna housing, namely an EAS pedestal, at the entrance/exit of a given interrogation zone. The motion sensor detects movement or vibration of the antenna housing. The sensor transmits signals to a controller that determines if the antenna housing has moved a predetermined amount. The system includes a metal detection module that determines if metal objects are proximate the pedestal. If metal objects are detected, a metal detection alarm is enabled. However, if it is determined that the antenna housing is moving or vibrating at least a predetermined amount, the controller inhibits generation of the metal detection alarm signal.

The system includes an antenna housing, a sensor situated proximate the antenna housing, the sensor generating a movement signal corresponding to movement of the antenna housing, and a controller in communication with the sensor where the controller determines if the antenna housing has moved at least a predetermined amount based on the movement signal. The controller inhibits generation of a metal detection alarm signal if it determines that the antenna housing has moved at least the predetermined amount.

### BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:
FIG. 1 is a block diagram of an exemplary metal detection system constructed in accordance with the principles of the present invention;
FIG. 2 is a block diagram of an exemplary integrated EAS/metal detection system constructed in accordance with the principles of the present invention;
FIG. 3 is an illustration of vibrations of a pedestal that may lead to false metal detection alarms;
FIG. 4 is a flowchart illustrating an exemplary process by which the present invention inhibits false metal detection alarms by determining if the pedestal has moved or is vibrating; and
FIG. 5 is a flowchart illustrating an exemplary process by which the present invention inhibits false metal detection alarms by determining if the pedestal is damaged or has malfunctioned.

### DETAILED DESCRIPTION OF THE INVENTION

Before describing in detail exemplary embodiments that are in accordance with the present invention, it is noted that the embodiments reside primarily in combinations of apparatus components and processing steps related to implementing a system and method for reducing occurrences of false alarms in metal detection systems. Accordingly, the system and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

One embodiment of the present invention provides a method and system for reducing false alarms that occur in metal detection systems due to the inadvertent vibration, movement, or malfunction of pedestals upon which the metal detector is mounted. These pedestals, also used to mount EAS transmitters and receivers, are typically located at the entrance/exit location of a store, for example. Inadvertent jostling of the pedestal may cause coupling of the transmitter and receiver fields leading to inadvertent actuation of the metal detection alarm even if an object containing metal has not entered or exited the interrogation zone.

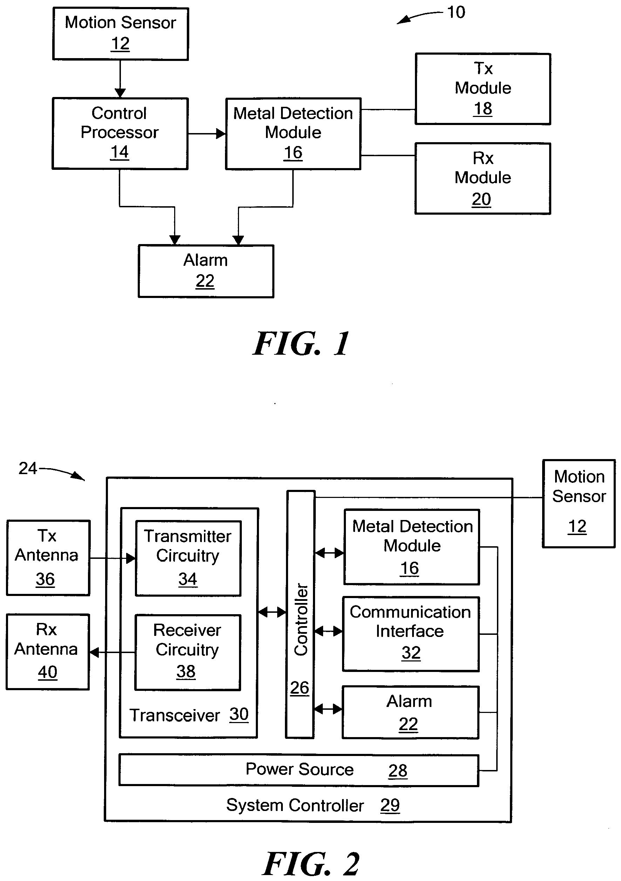

Referring now to the drawing figures in which like reference designators refer to like elements, there is shown in FIG. 1 a block diagram of an exemplary metal detection system 10 constructed in accordance with the principles of the present invention. Metal detection system 10 includes a motion sensor 12 for detection movement or vibration of an EAS/metal detection housing or pedestal, a control processor 14 in electrical communication with sensor 12, a metal detection module 16 in electrical communication with control processor 14, a transmitter module 18, a receiver module 20, and a metal detection alarm 22. Alarm 22 can be a visual or audio alarm situated anywhere where it can be seen or heard when actuated.

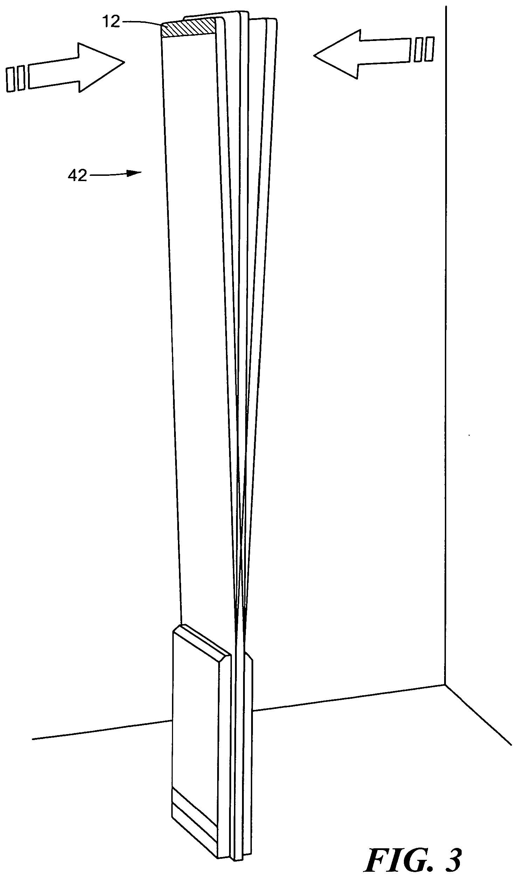

Motion sensor 12 is a device that detects motion of the pedestal. The pedestal referred to in this specification shall be defined as any housing containing transmit and receive antennas and associated circuitry such as a pedestal or pedestals located at or near an entrance/exit of an interrogation zone. The pedestal may be used in a combination EAS/metal detection system. Sensor 12 may be an accelerometer, or a "wake up" switch such as a fluid level switch. Sensor 12 can include other devices such as an optical sensor, shock sensor, laser level sensor, a tilt switch, tip-over switch, vibration switch, ball switch, float switch/sensor or magnetic sensor. In one embodiment, sensor 12 is mounted on or within, or placed proximate a pedestal, such as the pedestal shown in FIG. 3. Motion sensor 12 is situated proximate a pedestal located near the entrance of a specified area such as a store or proximate multiple pedestals located on opposite sides of the entrance. Control processor 14 contains the necessary hardware and software to receive signals from sensor 12 and determine if the signals from sensor 12 indicate that one or more pedestals is moving or is vibrating at least a predetermined amount. Control processor 12 may be located in a housing along with sensor 12 or may be located remotely from sensor 12.

Metal detection module 16 detects the presence of metal objects entering or leaving an interrogation zone. Metal detection module 16 may be implemented in hardware and/or as software operating on a microprocessor. Metal detection module 16 may also be a software module stored within the memory of, for example, a system controller of a combination EAS/metal detection system which is executed by a microprocessor. Alternately, metal detection module 16 can, itself, have a controller or other processing unit that performs the metal detection functions.

One method for detecting metal is based on detecting an induced eddy current during an electromagnetic ("EM") excitation. The induced eddy current dissipates very quickly, on the order of tens of microseconds in the case of a good conductor. The dissipation is worse with a poor conductor. Even with a good conductor, eddy current dissipation is about two orders of magnitude shorter than that of the acoustic marker.

Transmitter module 18, includes a transmitting antenna that transmits metal detection interrogation signals at a specified frequency such as, for example, 56kHz. Transmitter module 18 may be located on, within, or near the pedestal at the entrance of the store, and transmits an electromagnetic signal within a specified interrogation zone. The interrogation zone could be, for example, a floor of a store or a school, where metal objects may be brought into or removed from the zone. Transmitter module 18 also includes the necessary hardware and software to generate the signal. Receiver module 20 includes an antenna, "listens" for signals received from metal objects and forwards these signals to metal detection module 16. In one embodiment, if the received signal is above a given threshold, then the metal detection alarm 22 will sound. For example, module 16 will actuate alarm 22 if the received signal is approximately 0.1% of the reference signal. Thus, if the transmitted signal is based on a 14A signal, then module 16 will actuate alarm 22 if the received signal results in a current of approximately 14 mA.

Metal detection module 16 analyzes the incoming signals from receiver module 20, and, if necessary, compares the incoming signal to the transmitted signal in order to determine if an object containing metal has entered or left the interrogation zone. In one embodiment, metal detection module 16 determines a baseline voltage developed on the receiving antenna of receiver module 20 without the presence of metal in the interrogation zone by transmitting a burst of EM energy through the transmit antenna portion of transmission module 18 and measuring the voltage induced at the receiving antenna.

Metal detection module 16 determines if there is a metal object within the interrogation zone. However, if control processor 14 receives, from motion sensor 12, signals indicating pedestal movement, and analyzes these signals to determine that the pedestal is moving or vibrating at least a predetermined amount, control processor 14 transmits an alarm inhibit signal to metal detection module 16, preventing alarm 22 from actuating for a specified amount of time. Thus, if it is determined that the pedestal is moving or vibrating at least a predetermined amount, an override signal sent by either control processor 14 or metal detection module 16 to alarm 22 prevents alarm 22 from being activated even if a metal objected has been detected in the interrogation zone. If it has been determined that the pedestal is not moving or vibrating at least the predetermined amount, and metal detection module 16 determines that a metal object has been detected, metal detection module 16 generates an alarm signal which actuates alarm 22.

In another embodiment, the metal detection system 10 is incorporated within an EAS interrogation system, as shown in the block diagram of FIG. 2. In this embodiment, a combination EAS/metal detection system 24 includes both EAS interrogation components and metal detection components. EAS/metal detection system 24 may include a controller 26 (e.g., a processor or microprocessor), a power source 28, a transceiver 30, a communication interface 32 and alarm 22. The controller 26 controls radio communications, storage of data, communication of stored data to other devices, and activation of the alarm 22. The power source 28, such as a battery or AC power, supplies electricity to the EAS/metal detection system 24. System controller 29 controls the activities of each of the components of system 24. The alarm 22 may include software and hardware for providing a visual and/or audible alert in response to detecting an EAS marker and/or metal object entering or exiting an interrogation zone proximate the pedestal.

The transceiver 30 may include transmitter circuitry 34 electrically coupled to one or more transmitting antennas 36 and receiver circuitry 38 electrically coupled to one or more receiving antennas 40. Alternately, a single antenna or pair of antennas may be used as both the transmitting antenna 36 and the receiving antenna 40. A transceiver module is heretofore defined as a module that includes either a transceiver antenna having transmitting and receiving capabilities or a module containing a separate antenna for transmitting signals and a separate antenna for receiving signals. The transmitter circuitry 34 transmits a radio frequency signal using the transmit antenna 36 to "energize" an EAS marker within the interrogation zone of the EAS system 10. The receiver circuitry 38 detects the response signal of the EAS marker using the receive antenna 40. Motion sensor 12 transmits signals to controller 26 based on movements of the pedestal. Controller 26 analyzes these signals to determine if the pedestal has moved a predetermined amount. As in the metal detection system 10 of FIG. 2, metal detection module 16 determines if metal objects have been found proximate the pedestal based on signals transmitted by transmitter circuitry 34 and signals received by receiver circuitry 38. If it is determined that the pedestal has moved or is vibrating a requisite amount, controller 26 either instructs metal detection module 16 to prevent the actuation of alarm 22 or controller inhibits the actuation of alarm 22 directly.

FIG. 3 illustrates an exemplary EAS/metal detection pedestal used in a combination EAS/metal detection system 24. The embodiment in FIG. 3 shows motion sensor 12 situated at the top of pedestal 42. As mentioned above, the term "pedestal" as used herein is not limited to a floor mounted device and instead is used herein to define any housing that contains antenna(s) for transmitting and receiving, optionally along with associated circuitry necessary to transmit and receive EAS and/or metal detection interrogation signals. The housing can be floor or ceiling mounted, or situated anywhere near the entrance/exit area of the interrogation zone. Thus, the pedestal 42 showed in FIG. 3 is merely exemplary. Although shown at the top of pedestal 42, motion sensor 12 may be located anywhere on or near pedestal 42 in order to detect motion or vibration of pedestal 42. Sensor 12 can detect even minute movements of pedestal 42 that might occur due to a patron inadvertently bumping into the pedestal, or due to some other unforeseen occurrence. Sensor 12 can be calibrated to a variety of levels to take into account the dimensions of the pedestal 42 and how sensitive the sensor is required to be. It is also contemplated that metal detection module 16 can monitor the rate of change of movement of pedestal 42 over a period of time as measured by sensor 12. A predetermined rate of change of movement threshold can be established such that rates of change of movement below the threshold are not treated as a deflection of pedestal 42. Such a condition might occur, for example, if pedestal 42 is located in a breezy area where occasional small gusts of wind should be ignored.

In the embodiment depicted in FIG. 3, the top portion of pedestal 42 can be seen to move back and forth, due perhaps to a store patron inadvertently brushing up against the pedestal 42. Sensor 12, depending on its sensitivity, detects the deflection of the pedestal 42. For example, sensor 12 might be calibrated to detect that the top of a pedestal has been deflected from its non-moving vertical position in either direction a given distance, for example a minimum of 0.625 cm (0.25 of an inch). Sensor 12 will then transmit a signal to metal detection module 16, informing metal detection module 16 that pedestal 42 is moving or vibrating. Metal detection module 16 will then inhibit the actuation of alarm 22.

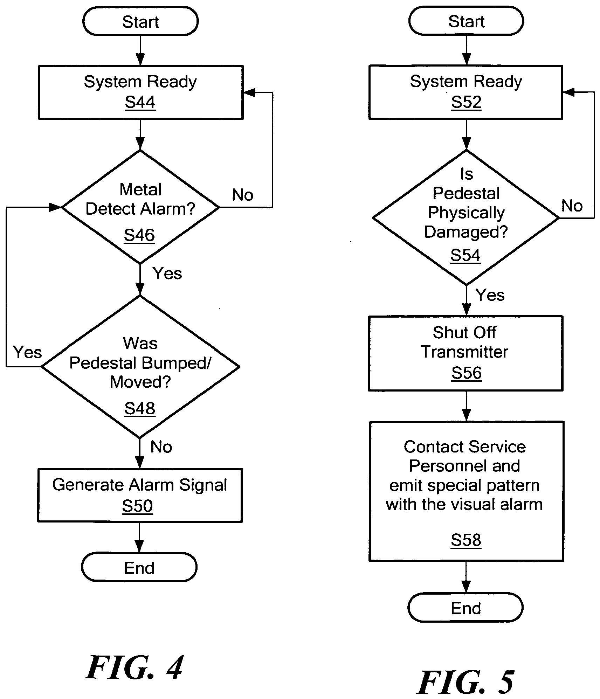

FIG. 4 is a flowchart illustrating the process of the present invention to reduce the amount of false alarms in metal detection systems 10 or integrated EAS/metal detection systems 24 by detecting movement of pedestal 42. For ease of reference, the steps shown in FIGS. 4 and 5 refer to the components of integrated EAS/metal detection system 24 in FIG. 2 in a retail store environment. Once the system is ready (step S44), it is determined by metal detection module 16, transmitter module 18 and receiver module 20 whether a metal object has been detected entering or exiting the interrogation zone (step S46). If a metal object has not been detected, then the system continues to be in "ready" mode, with EAS/metal detection system 24 in operational mode. If a metal object has been detected, rather than immediately activating alarm 22, it is first determined if pedestal 42 has been moved (step S48). As described above, motion sensor 12 communicates signals to metal detection module 16, informing the metal detection module 16 that motion of pedestal 42 has occurred. Optionally, store personnel could be alerted that one or more pedestals have been bumped or otherwise moved. The system continues to monitor metal objects entering or exiting the interrogation zone via pedestal 42 (step S46). When metal has been detected and it is determined that pedestal 42 is not moving, an alarm signal is generated to alert operating personnel and/or trigger alarm 22 (step S50).

FIG. 5 is a flowchart illustrating the process of the present invention to reduce the amount of false alarms in metal detection systems 10 or integrated EAS/metal detection systems 24 by detecting damage to or malfunction of pedestal 42. The system is initiated (step 52), and then a determination made as to whether the pedestal 42 is physically damaged or has malfunctioned (step S54). This can be determined by sensors 12 that detected more than just movement or vibration of pedestal 42. Sensor 12 or additional sensors can be placed, for example, at different locations on pedestal 42 to determine if the pedestal 42 has actually topped over, completely moved its position, or has failed to operate in some fashion. The sensor 12 can be calibrated to determine the magnitude of the impact on pedestal 42 such that impact at or above a certain level would provide a damage signal to the system controller 29 (FIG. 2) to shut off power to pedestal 42. If this has occurred, the metal detection function or the EAS function of a combination EAS/metal detection system 24 can be impacted. If the pedestal 42 has been damaged or has malfunctioned, sensor 12 transmits this information to system controller 29, which instructs the controller 26 to shut off metal detection and/or EAS transmitters (step S56). Optionally, a service call can be placed by store personnel or an outside agency with directives to attend to the damaged pedestal 42 (step S58).

The present invention can be realized in hardware, software, or a combination of hardware and software. Any kind of computing system, or other apparatus adapted for carrying out the methods described herein, is suited to perform the functions described herein.

A typical combination of hardware and software could be a specialized or general purpose computer system having one or more processing elements and a computer program stored on a storage medium that, when loaded and executed, controls the computer system such that it carries out the methods described herein. The present invention can also be embedded in a computer program product, which comprises all the features enabling the implementation of the methods described herein, and which, when loaded in a computing system is able to carry out these methods. Storage medium refers to any volatile or non-volatile storage device.

Computer program or application in the present context means any expression, in any language, code or notation, of a set of instructions intended to cause a system having an information processing capability to perform a particular function either directly or after either or both of the following a) conversion to another language, code or notation; b) reproduction in a different material form.

In addition, unless mention was made above to the contrary, it should be noted that all of the accompanying drawings are not to scale. It should be noted and understood that there can be improvements and modifications made of the present invention described in detail above without departing from the scope of the invention as set forth in the accompanying claims.

## Claims

1. An integrated electronic article surveillance ("EAS") / metal detection system (10), comprising:
an antenna housing;
a sensor (12) situated proximate the antenna housing, the sensor (12) being adapted to generate
a movement signal corresponding to movement of the antenna housing; **characterized in that** the system further comprises
a controller (26) in communication with the sensor (12), for determining if the antenna housing has moved at least a predetermined amount based on the movement signal,
a metal detection module (16) in communication with the controller (26), for determining if metal objects are within an interrogation zone of the system
the controller (26) inhibiting generation of a metal detection alarm signal if it is determined that the antenna housing has moved at least the predetermined amount, wherein
the antenna housing is an electronic article surveillance ("EAS")/metal detection pedestal (42) and the motion sensor (12) is mounted proximate the pedestal (42) in order to detect movement of the pedestal (42); further comprising a metal detection alarm, wherein the alarm (22) is in communication with the metal detection module (16) and the alarm (22) is disabled when it is determined that the pedestal (42) has moved at least the predetermined amount.

2. The system of Claim 1, further comprising:
a transmitter (18) operable to transmit an interrogation signal; and
a receiver (20) operable to detect a signal received from a metal object within the interrogation zone in response to the interrogation signal, wherein the metal detection module (16) is adapted to determine if metal objects are within the interrogation zone based on the interrogation signal and the signal received from the metal object.

3. The system of Claim 1, further comprising a transceiver antenna (30), the transceiver antenna (30) operable to transmit an interrogation signal and to detect a signal received from a metal object within the interrogation zone in response to the interrogation signal, wherein the metal detection module (16) is adapted to determine if metal objects are within the interrogation zone based on the interrogation signal and the signal received from the metal object.

4. The system of Claim 1, wherein the controller (26) is adapted to disable the alarm (22) for a predetermined period of time when it is determined that the pedestal (42) has moved at least the predetermined amount.

5. The system of Claim 1, wherein the controller (26) is adapted to monitor a rate of change of movement of the pedestal (42) and wherein the controller (26) does not inhibit the generation of a metal detection alarm signal if the controller (26) determines that the rate of change of movement of the pedestal (42) is less than a predetermined amount.

6. The system of Claim 1, wherein the controller (26) is adapted to determine if the pedestal (42) has potentially been damaged by comparing the movement signal received from the sensor (12) to a predetermined damage threshold, and wherein the controller (26) is adapted to disable a transmitter (18) upon determining that the pedestal (42) has been potentially damaged.

7. The system of Claim 1, wherein the controller (26) is adapted to determine if the pedestal (42) has moved at least a predetermined amount by:
determining if the pedestal (42) has deviated from a substantially vertical position;
determining an actual amount of deviation; and
comparing the actual amount of deviation to a predetermined deviation value.

8. A method for reducing false alarms in an integrated electronic article surveillance ("EAS") / metal detection system (10) comprising:
generating a movement signal corresponding to movement of an antenna housing;
the method being **characterized in** determining if the antenna housing has moved at least a predetermined amount based on the movement signal; and
inhibiting generation of a metal detection alarm signal if it is determined that the antenna housing has moved at least the predetermined amount;
wherein the antenna housing is an electronic article surveillance ("EAS")/metal detection pedestal (42) and wherein generating a movement signal corresponding to movement of the pedestal (42) is performed by a motion sensor (12) mounted proximate the pedestal (42) in order to detect movement of the pedestal (42); further comprising
inhibiting generation of the metal detection alarm signal if it is determined that the pedestal (42) has moved at least the predetermined amount even if it has been determined that metal objects are within the interrogation zone.

9. The method of Claim 8, wherein determining if the pedestal (42) has moved at least a predetermined amount based on the movement signal includes:
determining if the pedestal (42) has deviated from a substantially vertical position;
determining an actual amount of deviation; and
comparing the amount of deviation to a predetermined deviation value.

10. The method of Claim 8, further comprising determining if metal objects are within an interrogation zone of the system.

11. The method of Claim 10, wherein determining if metal objects are within an interrogation zone of the system includes:
transmitting an interrogation signal;
detecting a signal received from a metal object within the interrogation zone in response to the interrogation signal; and
comparing the interrogation signal and the signal received from the metal object.

12. The method of Claim 8, further comprising disabling a metal detection alarm for a predetermined period of time when it is determined that the pedestal (42) has moved at least the predetermined amount.

13. The method of Claim 8, further comprising determining if the pedestal (42) has been potentially damaged by comparing the movement signal received from the sensor to a predetermined damage threshold.

14. The method of Claim 13, further comprising disabling an interrogation signal transmitter upon determining that the pedestal (42) housing has been potentially damaged.

## Patentansprüche

1. Integriertes elektronisches Artikelüberwachungs- ("EAS") / Metalldetektionssystem (10), aufweisend:
ein Antennengehäuse;
einen Sensor (12), der sich in der Nähe des Antennengehäuses (12) befindet, wobei der Sensor (12) eingerichtet ist, ein Bewegungssignal zu erzeugen, das Bewegung des Antennengehäuses entspricht;
**dadurch gekennzeichnet, dass** das System ferner aufweist:
einen mit dem Sensor kommunizierenden Controller (26) zum Bestimmen, auf Grundlage des Detektionssignals, ob sich das Antennengehäuse zumindest um eine vorgegebene Menge bewegt hat,
ein mit dem Controller (26) kommunizierendes Metalldetektionsmodul (16) zum Bestimmen, ob sich Metallobjekte innerhalb einer Untersuchungszone des Systems befinden,
wobei der Controller (26) die Erzeugung eines Metalldetektionsalarmsignals unterbindet, wenn bestimmt wird, dass sich das Antennengehäuse zumindest um die vorgegebene Menge bewegt hat, wobei
es sich bei dem Antennengehäuse um einen Standfuß (42) zur elektronischen Artikelüberwachung (EAS) / Metalldetektion handelt und der Bewegungssensor (12) proximal zum Standfuß (42) montiert ist, um Bewegung des Standfußes (42) zu detektieren; ferner aufweisend einen Metalldetektionsalarm, wobei der Alarm (22) mit dem Metalldetektionssystem (16) kommuniziert, und der Alarm (22) deaktiviert ist, wenn bestimmt wird, dass sich der Standfuß (42) zumindest um die vorgegebene Menge bewegt hat.

2. System nach Anspruch 1, ferner aufweisend:
einen Sender (18), der betreibbar ist, ein Abfragesignal zu senden; und
einen Empfänger (20), der betreibbar ist, ein Signal, das von einem Metallobjekt innerhalb der Untersuchungszone empfangen wird, als Reaktion auf das Abfragesignal zu detektieren, wobei das Metalldetektionsmodul (16) eingerichtet ist, basierend auf dem Abfragesignal und dem Signal, das von dem Metallobjekt empfangen wird, zu bestimmen, ob sich Metallobjekte innerhalb der Untersuchungszone befinden.

3. System nach Anspruch 1, ferner aufweisend eine Sendeempfängerantenne (30), wobei die Sendeempfängerantenne (30) betreibbar ist, ein Abfragesignal zu senden und ein Signal zu detektieren, das von einem Metallobjekt innerhalb der Untersuchungszone als Reaktion auf das Abfragesignal empfangen wird, wobei das Metalldetektionsmodul (16) eingerichtet ist, basierend auf dem Abfragesignal und dem Signal, das von dem Metallobjekt empfangen wird, zu bestimmen, ob Metallobjekte innerhalb der Untersuchungszone vorhanden sind.

4. System nach Anspruch 1, wobei der Controller (26) eingerichtet ist, den Alarm (22) für einen vorgegebenen Zeitraum zu deaktivieren, wenn bestimmt wird, dass sich der Standfuß (42) zumindest um die vorgegebene Menge bewegt hat.

5. System nach Anspruch 1, wobei der Controller (26) eingerichtet ist, eine Änderungsrate von Bewegung des Standfußes (42) zu überwachen, und wobei der Controller (26) die Erzeugung eines Metalldetektionsalarmsignals nicht unterbindet, falls der Controller (26) bestimmt, dass die Änderungsrate der Bewegung des Standfußes (42) kleiner ist als eine vorgegebene Menge.

6. System nach Anspruch 1, wobei der Controller (26) eingerichtet ist, zu bestimmen, ob der Standfuß (42) möglicherweise beschädigt worden ist, indem das Bewegungssignal, das von dem Sensor (12) empfangen wird, mit einem vorgegebenen Schadensschwellenwert verglichen wird, und wobei der Controller (26) eingerichtet ist, bei Bestimmung, dass der Standfuß (42) möglicherweise beschädigt worden ist, einen Sender (18) zu deaktivieren.

7. System nach Anspruch 1, wobei der Controller (26) eingerichtet ist, zu bestimmen, ob sich der Standfuß (42) zumindest um eine vorgegebene Menge bewegt hat, durch:
Bestimmen, ob der Standfuß (42) von einer im Wesentlichen vertikalen Position abgewichen ist;
Bestimmen einer tatsächlichen Abweichungsmenge; und
Vergleichen der tatsächlichen Abweichungsmenge mit einem vorgegebenen Abweichungswert.

8. Verfahren zur Verringerung von Fehlalarmen in einem integrierten elektronischen Artikelüberwachungs- ("EAS")/ Metalldetektionssystem (10), wobei das Verfahren umfasst:
Erzeugen eines Bewegungssignals entsprechend Bewegung eines Antennengehäuses;
wobei das Verfahren **gekennzeichnet ist durch**:
Bestimmen, ob sich das Antennengehäuse zumindest um eine vorgegebene Menge bewegt hat, basierend auf dem Bewegungssignal; und
Unterbinden der Erzeugung eines Metalldetektionsalarmsignals, falls bestimmt wird, dass sich das Antennengehäuse zumindest um die vorgegebene Menge bewegt hat;
wobei das Antennengehäuse ein Standfuß (42) zur elektronischen Artikelüberwachung ("EAS")/ Metalldetektion ist und wobei die Erzeugung eines Bewegungssignals, das Bewegung des Standfußes (42) entspricht, von einem Bewegungssensor (12) durchgeführt wird, der in der Nähe des Standfußes (42) montiert ist, um Bewegung des Standfußes (42) zu detektieren; ferner umfassend:
Unterbinden der Erzeugung des Metalldetektionsalarmsignals, falls bestimmt wird, dass sich der Standfuß (42) zumindest um die vorgegebene Menge bewegt hat, selbst wenn bestimmt worden ist, dass sich Metallobjekte innerhalb der Untersuchungszone befinden.

9. Verfahren nach Anspruch 8, wobei das auf dem Bewegungssignal basierende Bestimmen, ob sich der Standfuß (42) zumindest um eine vorgegeben Menge bewegt hat, umfasst:
Bestimmen, ob der Standfuß (42) von einer im Wesentlichen vertikalen Position abgewichen ist;
Bestimmen einer tatsächlichen Abweichungsmenge; und
Vergleichen der Abweichungsmenge mit einem vorgegebenen Abweichungswert.

10. Verfahren nach Anspruch 8, ferner umfassend das Bestimmen, ob sich Metallobjekte innerhalb der Untersuchungszone des Systems befinden.

11. Verfahren nach Anspruch 10, wobei das Bestimmen, ob sich Metallobjekte innerhalb einer Untersuchungszone des Systems befinden, umfasst:
Senden eines Abfragesignals;
Detektieren eines von einem Metallobjekts innerhalb der Untersuchungszone empfangenen Signals als Reaktion auf das Abfragesignal; und
Vergleichen des Abfragesignals und des von dem Metallobjekt empfangenen Signals.

12. Verfahren nach Anspruch 8, ferner umfassend das Deaktivieren eines Metalldetektionsalarms für einen vorgegebenen Zeitraum, wenn bestimmt wird, dass sich der Standfuß (42) zumindest um die vorgegebene Menge bewegt hat.

13. Verfahren nach Anspruch 8, ferner umfassend das Bestimmen, ob der Standfuß (42) möglicherweise beschädigt worden ist, durch Vergleichen des Bewegungssignals, das von dem Sensor empfangen wird, mit einem vorgegebenen Beschädigungsschwellenwert.

14. Verfahren nach Anspruch 13, ferner umfassend das Deaktivieren eines Abfragesignalsenders, wenn bestimmt wird, dass das Gehäuse des Standfußes (42) möglicherweise beschädigt worden ist.

## Revendications

1. Système intégré de surveillance électronique d'articles (« EAS »)/détection de métal (10), comprenant :
un boîtier d'antenne ;
un capteur (12) situé à proximité du boîtier d'antenne, le capteur (12) étant adapté pour générer un signal de mouvement correspondant au mouvement du boîtier d'antenne ;
**caractérisé en ce que** le système comprend en outre
un dispositif de commande (26) en communication avec le capteur (12), pour déterminer si le boîtier d'antenne s'est déplacé d'au moins une quantité prédéterminée sur la base du signal de mouvement,
un module de détection de métal (16) en communication avec le dispositif de commande (26), pour déterminer si des objets métalliques se trouvent à l'intérieur d'une zone d'interrogation du système
le dispositif de commande (26) inhibant la génération d'un signal d'alarme de détection de métal s'il est déterminé que le boîtier d'antenne s'est déplacé au moins de la quantité prédéterminée, où
le boîtier d'antenne est un socle (42) de surveillance électronique d'articles (« EAS »)/détection de métal et le capteur de mouvement (12) est monté à proximité du socle (42) afin de détecter le mouvement du socle (42) ; comprenant en outre
une alarme de détection de métal, où l'alarme (22) est en communication avec le module de détection de métal (16) et l'alarme (22) est désactivée lorsqu'il est déterminé que le socle (42) s'est déplacé au moins de la quantité prédéterminée.

2. Système selon la revendication 1, comprenant en outre :
un émetteur (18) pouvant fonctionner pour transmettre un signal d'interrogation ; et
un récepteur (20) pouvant fonctionner pour détecter un signal reçu à partir d'un objet métallique à l'intérieur de la zone d'interrogation en réponse au signal d'interrogation, où le module de détection de métal (16) est adapté pour déterminer si des objets métalliques se trouvent à l'intérieur de la zone d'interrogation sur la base du signal d'interrogation et du signal reçu à partir de l'objet métallique.

3. Système selon la revendication 1, comprenant en outre une antenne émettrice-réceptrice (30), l'antenne émettrice-réceptrice (30) pouvant fonctionner pour émettre un signal d'interrogation et pour détecter un signal reçu à partir d'un objet métallique à l'intérieur de la zone d'interrogation en réponse au signal d'interrogation, où le module de détection de métal (16) est adapté pour déterminer si des objets métalliques se trouvent à l'intérieur de la zone d'interrogation sur la base du signal d'interrogation et du signal reçu à partir de l'objet métallique.

4. Système selon la revendication 1, où le dispositif de commande (26) est adapté pour désactiver l'alarme (22) pendant une période de temps prédéterminée lorsqu'il est déterminé que le socle (42) s'est déplacé au moins de la quantité prédéterminée.

5. Système selon la revendication 1, où le dispositif de commande (26) est adapté pour surveiller un taux de changement de mouvement du socle (42) et où le dispositif de commande (26) n'empêche pas la génération d'un signal d'alarme de détection de métal si le dispositif de commande (26) détermine que le taux de changement de mouvement du socle (42) est inférieur à une quantité prédéterminée.

6. Système selon la revendication 1, où le dispositif de commande (26) est adapté pour déterminer si le socle (42) a potentiellement été endommagé en comparant le signal de mouvement reçu à partir du capteur (12) à un seuil d'endommagement prédéterminé, et où le dispositif de commande (26) est adapté pour désactiver un émetteur (18) lorsqu'il détermine que le socle (42) a été potentiellement endommagé.

7. Système selon la revendication 1, où le dispositif de commande (26) est adapté pour déterminer si le socle (42) s'est déplacé d'au moins une quantité prédéterminée :
en déterminant si le socle (42) a dévié d'une position sensiblement verticale ; en déterminant une quantité réelle de déviation ; et
en comparant la quantité réelle de déviation à une valeur de déviation prédéterminée.

8. Procédé pour réduire de fausses alarmes dans un système intégré de surveillance électronique d'articles (« EAS »)/détection de métal (10) comprenant :
le fait de générer un signal de mouvement correspondant au mouvement d'un boîtier d'antenne ;
le procédé étant **caractérisé par**
le fait de déterminer si le boîtier d'antenne s'est déplacé d'au moins une quantité prédéterminée sur la base du signal de mouvement ; et
le fait d'inhiber la génération d'un signal d'alarme de détection de métal s'il est déterminé que le boîtier d'antenne s'est déplacé au moins de la quantité prédéterminée ;
où le boîtier d'antenne est un socle (42) de surveillance électronique d'articles (« EAS »)/détection de métal et où le fait de générer un signal de mouvement correspondant au mouvement du socle (42) est effectué par un capteur de mouvement (12) monté à proximité du socle (42) afin de détecter le mouvement du socle (42) ; comprenant en outre
le fait d'inhiber la génération du signal d'alarme de détection de métal s'il est déterminé que le socle (42) s'est déplacé au moins de la quantité prédéterminée même s'il a été déterminé que des objets métalliques se trouvent à l'intérieur de la zone d'interrogation.

9. Procédé selon la revendication 8, où le fait de déterminer si le socle (42) s'est déplacé d'au moins une quantité prédéterminée sur la base du signal de mouvement inclut :
le fait de déterminer si le socle (42) a dévié d'une position sensiblement verticale ;
le fait de déterminer une quantité réelle de déviation ; et
le fait de comparer la quantité de déviation à une valeur de déviation prédéterminée.

10. Procédé selon la revendication 8, comprenant en outre le fait de déterminer si des objets métalliques se trouvent à l'intérieur d'une zone d'interrogation du système.

11. Procédé selon la revendication 10, où le fait de déterminer si des objets métalliques se trouvent à l'intérieur d'une zone d'interrogation du système inclut :
le fait de transmettre un signal d'interrogation ;
le fait de détecter un signal reçu à partir d'un objet métallique à l'intérieur de la zone d'interrogation en réponse au signal d'interrogation ; et
le fait de comparer le signal d'interrogation et le signal reçu à partir de l'objet métallique.

12. Procédé selon la revendication 8, comprenant en outre le fait de désactiver une alarme de détection de métal pendant une période de temps prédéterminée lorsqu'il est déterminé que le socle (42) s'est déplacé au moins de la quantité prédéterminée.

13. Procédé selon la revendication 8, comprenant en outre le fait de déterminer si le socle (42) a été potentiellement endommagé en comparant le signal de mouvement reçu à partir du capteur à un seuil d'endommagement prédéterminé.

14. Procédé selon la revendication 13, comprenant en outre le fait de désactiver un émetteur de signal d'interrogation lorsqu'il est déterminé que le boîtier du socle (42) a été potentiellement endommagé.
